# EUROPÄISCHE PATENTANMELDUNG

(11) **EP 3 715 574 A1**
(43) Veröffentlichungstag der Anmeldung: **30.09.2020**
(21) Anmeldenummer: 20000135.2
(22) Anmeldetag: 27.03.2020
(51) Int. Cl.: E05F 15/668, G01D 5/14

(54) **GETRIEBLICHE ANORDNUNG MIT EINER MESSEINRICHTUNG**

(30) Priorität: 29.03.2019 DE 102019002294
(71) Anmelder: Novoferm tormatic GmbH, 44145 Dortmund (DE)
(72) Erfinder: Die Erfindernennung liegt noch nicht vor

(57) **Zusammenfassung**

Die Erfindung betrifft eine Getriebliche Anordnung, die, durch einen Elektromotor angetrieben, zur Verwendung bei automatisierten Bauwerkverschlüssen eingesetzt werden kann, und dabei im Wesentlichen bestehend aus einer Antriebsschnecke, deren Drehbewegung auf ein Schneckenrad übertragen wird, sowie einem Antriebsrad, das mit einer Antriebswelle zur Ortsveränderung des Bauwerksöffnungsverschlusses wirkverbunden ist, sowie einer Positionsbestimmungseinrichtung von Positionen des Bauwerksverschlusses, wobei der getrieblichen Anordnung eine Messeinrichtung zur Bestimmung der absoluten Position oder einer absoluten Drehwinkelposition der Antriebswelle zugeordnet ist, wobei die Messeinrichtung aus einer Baugruppe und einer damit kontaktlos zusammenwirkenden Baugruppe aus drehbaren Elementen besteht, die mit der Antriebswelle in Wirkverbindung stehen.

## Beschreibung

Die Erfindung betrifft eine getriebliche Anordnung mit einer Messeinrichtung. Dabei besteht die getriebliche Anordnung im Wesentlichen aus einer Antriebsschnecke, deren Drehbewegung auf ein Schneckenrad übertragen wird, sowie einem Antriebsrad, das mit einer Welle zur Ortsveränderung eines automatisierten Bauwerksverschlusses in Wirkverbindung steht. Die getriebliche Anordnung ist mit einem Elektromotor verbunden und ist diesem direkt oder adaptiv zugeordnet.

Bauwerksverschlüsse sind in unterschiedlichen Ausführungen hinlänglich bekannt. So kann beispielsweise ein Sektionaltor aus der DE 10 2011 052 557 A1 entnommen werden, dessen Torblatt aus einzelnen, gelenkig miteinander verbundenen Sektionen oder Elementen besteht, die in seitlichen Führungen mittels Rollen geführt werden, wobei die seitlichen Führungen aus einem vertikalen Verlauf in einen gebogenen Verlauf mit einem zwischen den Führungen vorhandenem Zwischenraum übergehen und in einer Parkposition im sturzseitigen Bereich angeordnet sind, wobei der gebogene Verlauf aus konzentrisch verlaufenden einzelnen Kreisbogensegmenten besteht, deren Radien sich von Kreisbogensegment zu Kreisbogensegment verjüngen, wobei die Kreisbogensegmente alternierend auf mindestens zwei durch eine Distanz beabstandete Kreisbogensegmentmittelpunkte bezogen sind.

Mit der DE 199 18 414 A1 ist eine Antriebseinheit für ein Tor mit einem elektromechanischen Antriebsmotor mit einem Getriebe bekanntgeworden, wobei mittels einer Abtriebsachse das Tor bewegbar ist. Dabei ist eine Positionserfassungseinrichtung vorhanden, im Wesentlichen bestehend aus einer elektronischen Steuerungseinheit und aus einem Informationsgeber mit gleichmäßiger Impulsfolge pro Umdrehung, der mit der Abtriebsachse und der elektronischen Steuerungseinheit zusammenwirkt. Dabei werden pro Umdrehung der Abtriebsachse durch einen Informationsträger Impulse gemessen, wobei gleichzeitig der Informationsträger so ausgebildet ist, dass dieser durch einen Informationsgeber einen in der zeitlichen Länge veränderten Impuls erfasst. Diese Informationen werden in der elektronischen Steuerungseinheit nicht flüchtig gespeichert und weiterverarbeitet.

Grundsätzlich ist es bei Bauwerksverschlüssen, die durch einen Antrieb automatisiert sind, ist es von besonderer Wichtigkeit sowohl beim Öffnungs- als auch beim Schließvorgang stets die genaue Position zu jedem Zeitpunkt zu kennen. Dabei können beispielsweise die beweglichen Elemente des Bauwerksverschlusses durch eine getriebliche Anordnung mit Verbindung mit einem Elektromotor oberhalb der Bauwerksöffnung auf einer Welle aufgerollt oder aufgewickelt oder andersartig in eine Parkposition gebracht werden.

Die Aufgabe der Erfindung besteht darin, eine getriebliche Anordnung, die auf einer Antriebswelle eines Bauwerksverschlusses in der Art verwendbar ist, zu schaffen, dass stets die absolute, relative Veränderung der Antriebswelle zu mindestens einer Nullposition durch eine Messeinrichtung ermittelt werden kann. Ferner soll die Betriebssicherheit derartiger getrieblichen Anordnungen beim Einsatz an Bauwerksverschlüssen erhöht werden.

Die Aufgabe der Erfindung wird durch die Merkmale des Anspruches 1 gelöst. Die sich an den Anspruch 1 anschließenden Unteransprüche geben dabei eine weitere Ausgestaltung des erfindungsgemäßen Gedankens wieder.

Durch eine Antriebseinheit, im Wesentlichen bestehend aus einem Elektromotor in Verbindung mit einer getrieblichen Anordnung, kann ein automatisierter Bauwerksverschluss angetrieben werden. Beispielsweise können dabei untereinander drehbewegliche Elemente auf einer Welle, die gleichzeitig die Antriebswelle darstellt, aufgewickelt werden, oder mittels seitlicher Führungen, wie bei einer Spiralausführung, geführt werden. Üblicherweise werden die Positionen der Schließstellung oder der Öffnungsstellung des Bauwerksverschlusses wahlweise als Nullposition festgelegt. Mittels der Erfindung ist es aber auch möglich die Nullposition an einer beliebigen Stelle des Fahrweges festzulegen. In einem solchen Falle werden die Positionen oberhalb der Nullstellung positiv und unterhalb der Nullstellung negativ in ihren absoluten Werten oder Beträgen angegeben.

Durch die Drehbewegung der Antriebswelle wird der Bauwerksverschluss absolut in seiner Position ortsverändert. Aufgrund der Drehbewegung der Antriebswelle kann daraus, mittels einer Messeinrichtung an oder in der getrieblichen Anordnung, eine absolute Drehwinkelposition zu jeder Position abgeleitet oder errechnet werden. Dafür wird erfindungsgemäß die Messeinrichtung innerhalb der getrieblichen Anordnung auswechselbar angeordnet, die so direkt die Drehinformationen von der Antriebswelle erfasst. Diese Drehinformationen können aufbereitet werden oder direkt an eine mit der getrieblichen Anordnung verbundenen Antriebseinheit und deren zugehörige Steuerung übertragen werden. Die Verbindung zwischen der Messeinrichtung und der Steuerung kann drahtgebunden oder auch mittels einer Funkverbindung ausgeführt werden.

Die der getrieblichen Anordnung zugeordnete Messeinrichtung besteht dabei im Wesentlichen aus zwei auswechselbaren Baugruppen. Dabei sind in der ersten Baugruppe drehbare Elemente und in der zweiten Baugruppe ortsfeste Sensorelemente vorhanden, die mit Informationsgebern, die den drehbaren Elementen zugeordnet sind, zusammenwirken.

Die drehbaren Elemente bestehen dabei aus einem mit der Antriebswelle verbundenen Übertragungszahnrad. Mit diesem Übertragungszahnrad stehen über separate Lagerungen ein erstes Messzahnrad und ein zweites Messzahnrad in Wirkverbindung. Den Messzahnrädern sind dabei Permanentmagnete zugeordnet, die beispielsweise in einer Magnetaufnahme an oder mit den Messzahnrädern lagefixiert sind. Diese Permanentmagnete können aus Werkstoffen der seltenen Erden bestehen, weil derartige Permanentmagnete eine sehr große Feldstärke besitzen. Die Permanentmagnete können entweder radial oder axial zweipolig magnetisiert sein.

Die beiden Messzahnräder der ersten Baugruppe, die nicht miteinander kämmen, sind jeweils mit einer unterschiedlichen Anzahl von Zähnen ausgestattet. Dabei ist mindestens eines der Messzahnräder mit einem Zahn weniger oder mindestens einem Zahn mehr versehen, als das andere Messzahnrad. Durch die unterschiedliche Zähnezahl ergibt sich damit, angetrieben durch das Übertragungszahnrad mit einer wesentlich höheren Zähnezahl, bei den beiden Messzahnrädern jeweils eine unterschiedliche Umdrehungszahl. Die unterschiedlichen Drehbewegungen der Messzahnräder mit den jeweiligen zugeordneten Permanentmagneten werden in einer zweiten stationären Baugruppe durch zwei getrennte Sensorelemente erfasst. Diese beiden Sensorelemente können als Magnetfeldsensoren, Magnetsensoren oder Hallsensoren ausgeführt werden. Die Magnetfeldsensoren können vorzugsweise in einer Ausführung mit vier Quadranten ausgeführt werden. Diese Sensoren sind in der Lage Winkelmessungen von mehr als 360° und Winkelgeschwindigkeiten zu erfassen. Ferner sind integrierte Selbsttestroutinen, die insbesondere bei einem Start durchgeführt werden, zur Sicherung der Messergebnisse ausführbar. Ebenfalls können Überspannungen und Unterspannungen in der Versorgung erkannt werden. Dabei werden die Ausrichtungen und Änderungen der magnetischen Feldstärken der beiden Permanentmagnete durch die sich unterschiedlich drehenden Messzahnräder ermittelt. Interne Messungen von Sinus- und Cosinus-Winkelkomponenten werden durchgeführt. Dieses kann bei den Sensoren beispielsweise durch vier einzelne Elemente einer Wheatstone Sensorbrücke erreicht werden. Die Datenkommunikation wird mit einer bidirektionalen, synchronen seriellen Kommunikation durchgeführt. Diese beiden unterschiedlichen Messsignale werden in der stationären Baugruppe in einer beispielsweise auf einem als Platine ausgeführten Träger angeordneten Datenaufbereitung so aufbereitet, dass Fehlmessungen ausgeschlossen werden können. Zur Sicherung der einzelnen Daten der beiden Messzahnräder kann zusätzlich zwischen beiden Messzahnrädern eine Abschirmung eingefügt werden. Die aufbereiteten Signale werden anschließend in einer Datenverarbeitung so verarbeitet, dass stets die genaue Position des Bauwerksverschlusses vorliegt. Dieses geschieht über die Drehwinkelpositionen der Antriebswelle. Ein aufbereitetes Signal kann entweder leitungsgebunden oder über eine Funkverbindung an die Steuerung der Antriebseinheit übermittelt werden.

Die Erfindung wird anhand eines möglichen Ausführungsbeispieles in den folgenden Zeichnungen erläutert.
- Figur 1: Eine mögliche Ausbildung einer getrieblichen Anordnung in Verbindung mit einer Messanordnung in einer perspektivischen Darstellung;
- Figur 2: wie Figur 1, jedoch in einer schematischen Darstellung;
- Figur 3: eine prinzipielle Darstellung einer Messeinrichtung zur Drehwinkelbestimmung einer Welle oder eines Antriebsrades;
- Figur 4: eine mögliche Ausführungsform einer Messeinrichtung in der Draufsicht;
- Figur 5: wie Figur 4, jedoch in einer perspektivischen Darstellung;
- Figur 6: eine Darstellung einer möglichen Ausführungsform einer Messeinrichtung;
- Figur 7: eine Einzeldarstellung eines Messzahnrades;
- Figur 8: ein Blockschaltbild der Signalverarbeitung.

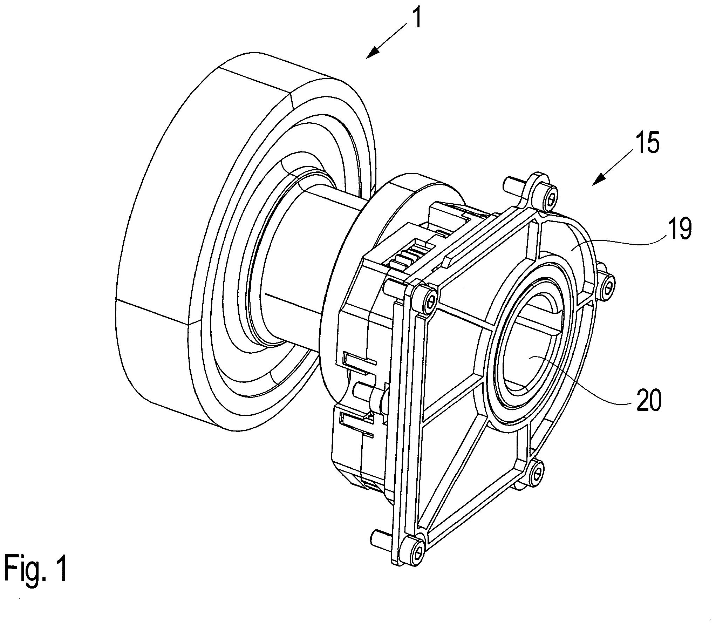

In der perspektivischen Darstellung nach Figur 1 wird eine Messeinrichtung 15 zur absoluten Positionsbestimmung einer durch den Antriebswellenaustritt 20 hindurch anordbaren Antriebswelle 6 wiedergegeben. Die Antriebswelle 6 wird dabei drehmomentenübertragend mit dem Antriebswellenaustritt 20 verbunden. Dabei wird auf der linken Seite eine getriebliche Anordnung 1 angegeben, die auf der rechten Seite der Darstellung mit einer Messeinrichtung 15 wirkverbunden ist. Diese Messeinrichtung 15 kann durch einen Verschluss 19 verschlossen sein. Ebenfalls kann die getriebliche Anordnung 1 Bestandteil der getrieblichen Anordnung 1 sein und somit auch innerhalb eines gemeinsamen Gehäuses untergebracht sein. Die getriebliche Anordnung 1 mit der Messeinrichtung kann separat ausgebildet oder aber auch Teil einer gemeinsamen Antriebseinheit sein, der auch ein Elektromotor zugerechnet werden kann. Somit ist eine solche Antriebseinheit beispielsweise mit einer Antriebswelle eines Bauwerksverschlusses wirkverbunden, um diesen aus einer Schließstellung in eine Öffnungsstellung und umgekehrt zu betreiben. Dabei sind Zwischenstellungen, das heißt nicht komplette Öffnungsstellungen oder Schließstellungen möglich. Um dabei stets die genaue Position des Bauwerksverschlusses während der Fahrt und auch in der Ruhestellung zu kennen, wird die getriebliche Anordnung 1 mit der Messeinrichtung 15 eingesetzt.

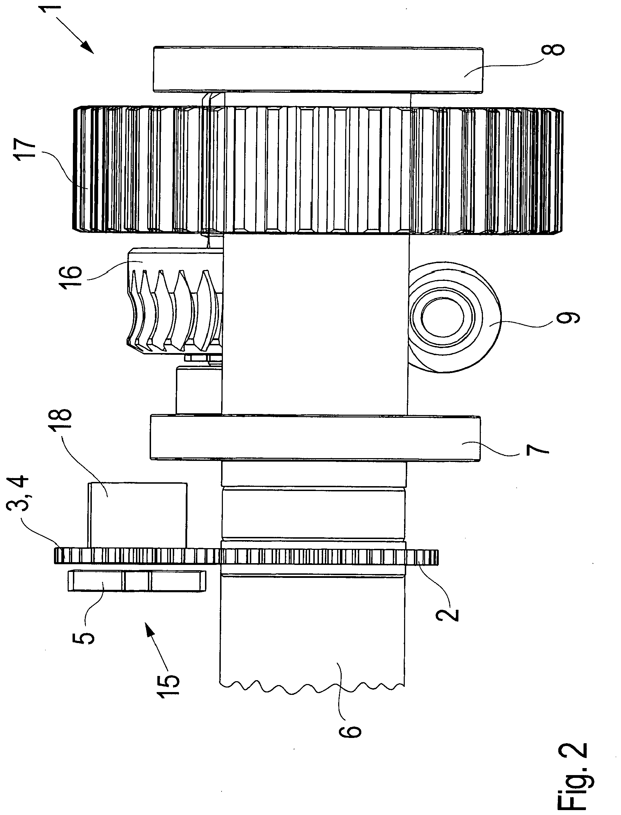

Eine mögliche, schematisch dargestellte Ausführungsform der getrieblichen Anordnung 1 gibt die Figur 2 wieder. Durch eine in Rotation versetzte Antriebsschnecke 9 wird dabei ein Schneckenrad 16 angetrieben, das direkt oder indirekt die Umdrehung auf ein Antriebsrad 17 überträgt. Das Antriebsrad 17 ist dabei auf einer Antriebswelle 6 angebracht und versetzt die Antriebswelle 6 in Rotation. Die Antriebswelle 6 ist über Lager 7 und 8 so gelagert, dass die nicht dargestellten Elemente eines Bauwerksverschlusses mittels eines ebenfalls nicht dargestellten Elektromotors über die Antriebswelle 6 ortsveränderbar sind.

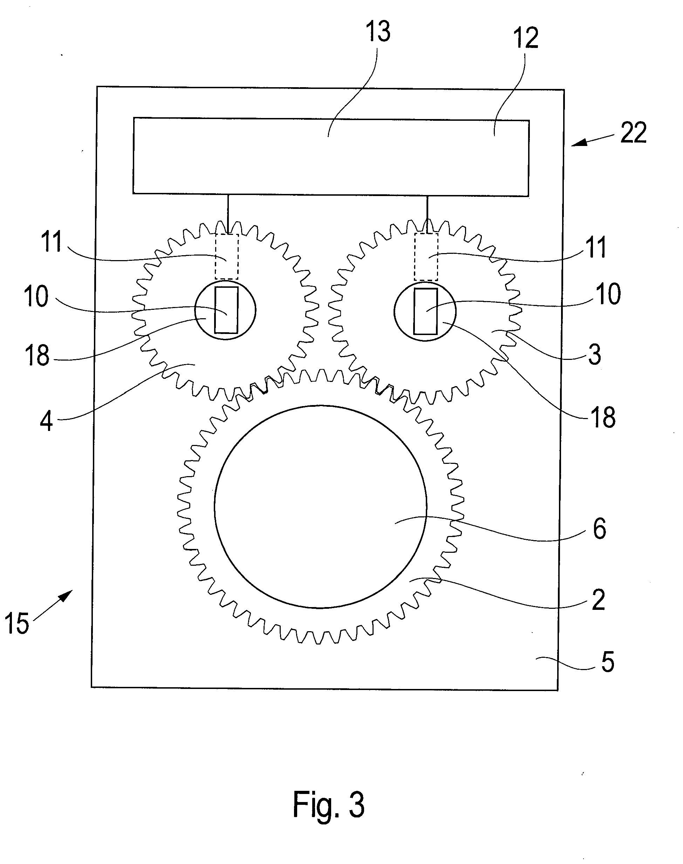

Auf der linken Seite ist in der Figur 2 beispielsweise mit der Antriebswelle 6 kraft- und formschlüssig ein Übertragungszahnrad 2 dargestellt. Oberhalb des Übertragungszahnrades 2 sind ein erstes Messzahnrad 3 und ein zweites Messzahnrad 4 zu entnehmen. Die Messzahnräder 3, 4 werden somit durch die Drehbewegungen der Antriebswelle 6 über das Übertragungszahnrad 2 in Rotation versetzt. Die Zähnezahl des Übertragungszahnrades 2 ist beliebig, jedoch ein Mehrfaches gegenüber der Zähnezahl der Messzahnräder 3, 4. Ferner sind die Zähnezahlen des ersten Messzahnrades 3 und des zweiten Messzahnrades 4 grundsätzlich beliebig. Die beiden Messzahnräder 3 und 4 stehen jedoch in einem Verhältnis zueinander, denn eines dieser Messzahnräder 3, 4 hat eine geringere oder größere Anzahl von Zähnen. Um die Genauigkeit zu erhöhen, ist dieses Verhältnis der Anzahl der Zähne untereinander am effektivsten, wenn eines der Messzahnräder 3 oder 4 einen Zahn mehr oder einen Zahn weniger aufweist. Das Übertragungszahnrad 2 und die Messzahnräder 3, 4 sind Teil der Messeinrichtung 15, deren prinzipieller Aufbau der Figur 3 entnehmbar ist. Die Messzahnräder 2, 4 sind jeweils mit Magnetaufnahmen 18 versehen, die für jeweils einen Permanentmagneten 10 ausgelegt sind. Die äußere Form der Permanentmagnete 10 ist grundsätzlich beliebig. Die Permanentmagnete 10 können aus Werkstoffen der seltenen Erden bestehen und sind bipolar magnetisiert. Je nach Einbausituation wird die Magnetisierung in einer axialen oder radialen Ausbildung ausgeführt.

Zu den Permanentmagneten 10 sind distanziert Sensorelemente 11 der zweiten stationären Baugruppe 5 der Messeinrichtung 15 platziert. Diese Sensorelemente 11 detektieren bei den Rotationsbewegungen der Messzahnräder 3, 4 getrennt die sich unterschiedlich verändernden Feldstärken der beiden Permanentmagnete 10.

Durch die schematische Darstellung nach Figur 3 kann das Zusammenwirken der Permanentmagnete 10, die formschlüssig mit den Messzahnrädern 3, 4 verbunden sind, und die Zuordnung der Sensorelemente 11 entnommen werden. Die Sensorelemente 11 dienen dazu, die durch die unterschiedlichen Rotationsbewegungen der Messzahnräder 3, 4, aufgrund ihrer unterschiedlichen Anzahl von Zähnen, magnetischen Feldstärkenänderungen der bipolaren Permanentmagnete 10 zu erfassen. Aus den Messinformationen der beiden Sensorelemente 11 können beispielsweise durch die Datenaufbereitung 12 verwertbare Signale generiert werden, die anschließend der Datenverarbeitung 13 zugeführt werden. Durch Rechenoperationen werden die ermittelten Daten der beiden Sensorelemente 11 so verarbeitet, dass ein genauer Bezug zu der sich drehenden Antriebswelle 6 gegeben ist. Dieser Veränderungszustand der Antriebswelle 6 wird dabei in Winkelgraden mit Angaben über 360° festgehalten, welches einer genauen Positionsangabe des Bauwerksverschlusses in jeder seiner Stellungen entspricht. Dieses Signal gibt neben der genauen Veränderung des Drehwinkels der Antriebswelle 6 somit auch die genaue Winkelangabe der Antriebswelle 6 gegenüber der Schließstellung und der Offenstellung des Bauwerksöffnungsverschlusses an.

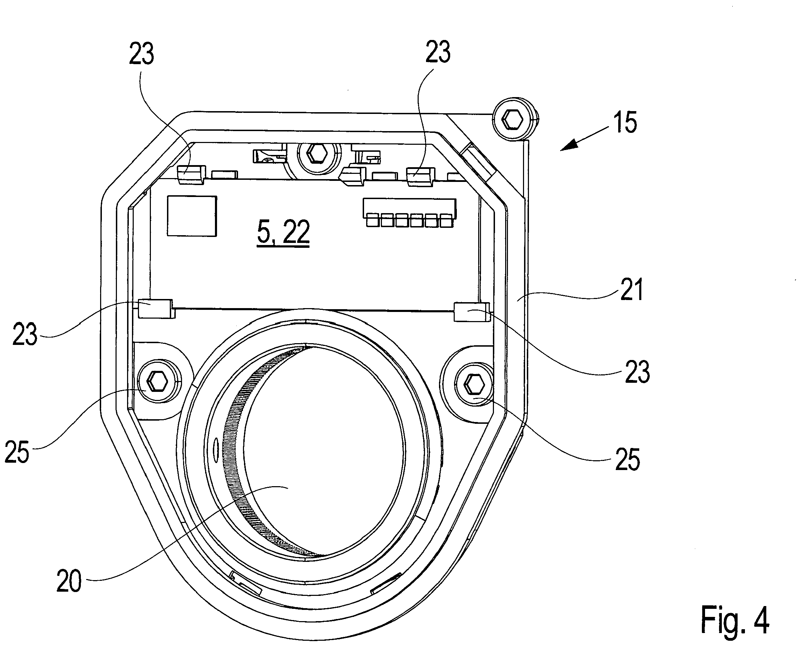

In den Figuren 4 bis 7 wird eine bevorzugte Ausführungsform der Messeinrichtung 15 wiedergegeben. Diese Ausführungsform kann direkt in einer getrieblichen Anordnung 1 in ein gemeinsames Gehäuse eingebaut werden, doch ist es auch möglich, diese Ausführung der Messanordnung 15 adaptiv in oder an einer getrieblichen Anordnung 1 auszuführen.

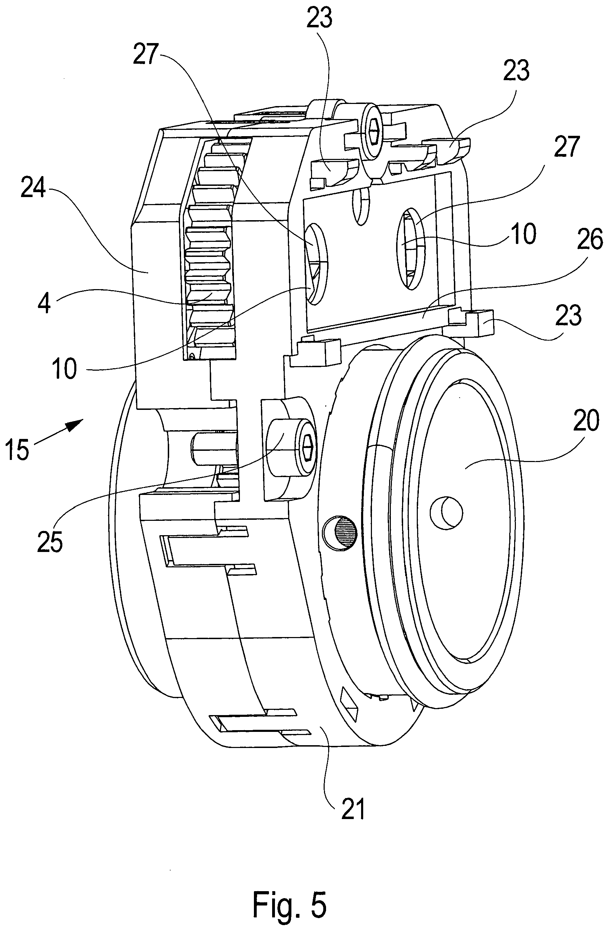

Die Darstellung der Figur 4 zeigt die Messanordnung in der Vorderansicht, so dass deutlich ein Antriebswellendurchtritt 20 zur Verbindung mit der getrieblichen Anordnung 1 für die Antriebswelle 6 sichtbar wird. Oberhalb des Antriebswellendurchtrittes 20 ist die stationäre Baugruppe 5 in Form einer Platine 22 auswechselbar angeordnet. Dabei wird die Befestigung der Platine 22 durch Halterungen 23 realisiert. Ferner ist ein Gehäuseoberteil 21 eines Gehäuses der Messeinrichtung 15 zu sehen, das mittels Schrauben 25 mit einem Gehäuseunterteil 24 verschraubt ist. Ferner können das Gehäuseoberteil 21 und das Gehäuseunterteil 24 auch über Verhakungen untereinander gehalten werden, was auch der Figur 5 entnommen werden kann. Unterhalb des Bereiches, wo die Platine 22 auswechselbar angeordnet werden kann, können in dem Gehäuseoberteil 21 zwei Durchbrüche 27 enthalten sein, über die die Sensorelemente 11 die Rotationsbewegungen der darunterliegenden Permanentmagnete 10 detektieren. Derartige Durchbrüche 27 können entfallen, wenn das Material des Gehäuses aus nicht ferromagnetischem Material bestehen würde.

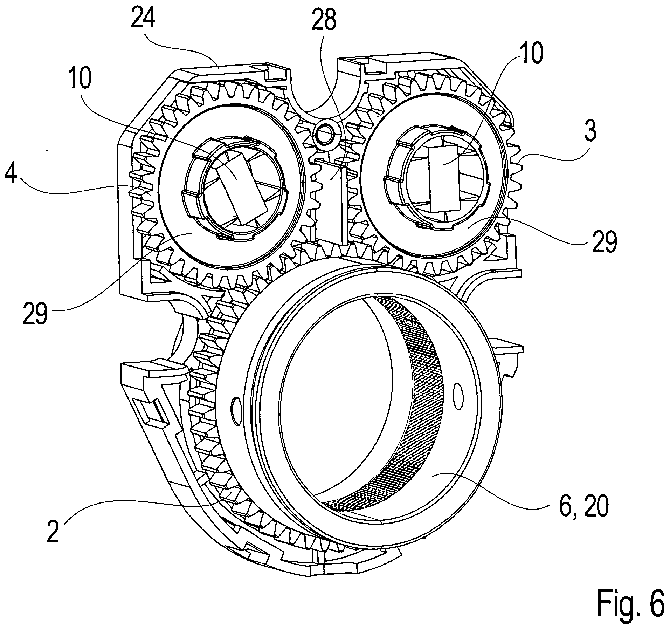

Wird das Gehäuseoberteil 21 der Messeinrichtung 15 von dem Gehäuseunterteil 24 entfernt, so wird, gemäß der Figur 6, der Teil des Messaufbaues der Messeinrichtung 15 sichtbar. Das Übertragungszahnrad 2 ist mit dem Antriebswellendurchtritt 20 fest wirkverbunden, so dass bei der Verbindung mit der getrieblichen Vorrichtung 1 stets die Drehbewegungen der Antriebswelle 6 direkt auf das Übertragungszahnrad 2 übertragen werden. Oberhalb des Übertragungszahnrades 2 sind einzeln drehgelagert die Messzahnräder 3 und 4 so platziert, dass die Zähne der vorhandenen Zahnräder miteinander kämmen können. In den beiden Messzahnrädern 3 und 4 sind jeweils die Permanentmagnete 10 so eingefügt, dass diese ihre Position nicht verändern können. Damit die Feldlinien der bipolar magnetisierten Permanentmagnete 10 sich nicht gegenseitig beeinflussen, ist zur Absicherung zwischen den Messzahnrädern 3 und 4 eine Abschirmung 28 eingefügt worden. Durch diese Abschirmung 28 werden die empfangenen Signale der beiden Sensorelemente 11 untereinander nicht verfälscht.

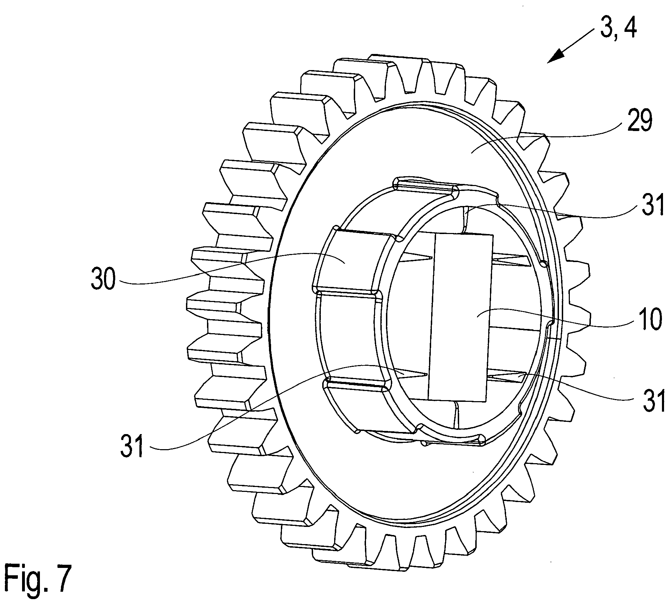

Eine mögliche Ausführungsform der Ausführung der Messzahnräder 3, 4 gibt die Figur 7 wieder. Der Zahnkranz des Messzahnrades 3, 4 weist innen eine Lagerung 29 auf, die mittig eine Erhebung zur Aufnahme des Permanentmagneten 10 aufweist. In diesem Ausführungsbeispiel ist ein quarderförmiger Permanentmagnet 10 mittig angeordnet worden. Dabei wird der Permanentmagnet 10 durch seitliche Abstützungen 31 gehalten. Die Form der Permanentmagneten 10 kann auch rund sein. Die Messzahnräder 3, 4 können auch in dem Gehäuseoberteil 21 durch die an der Lagerung 29 angeformten Vorsprünge 30 zusätzlich gelagert werden.

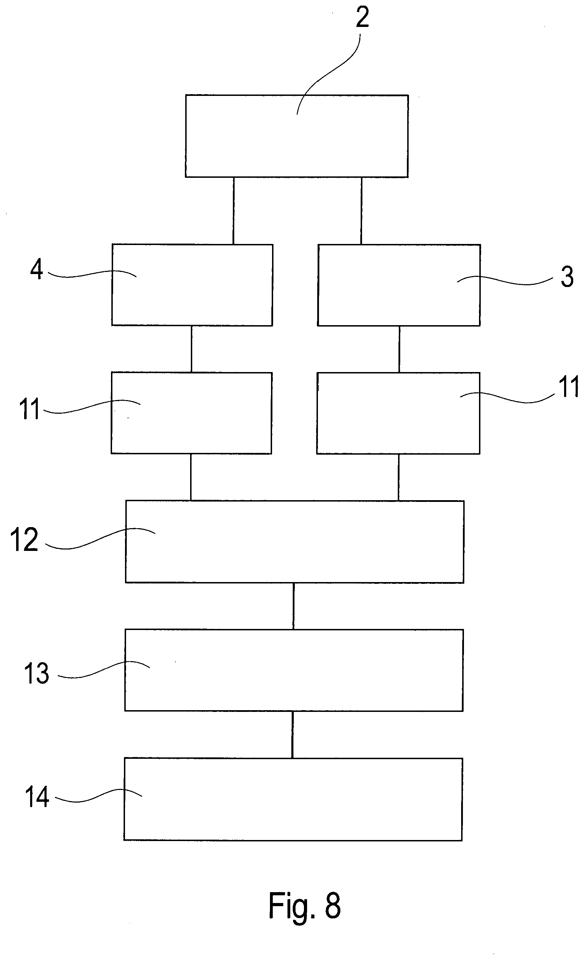

Durch die Darstellung des Blockschaltbildes nach Figur 8 kann die Informationsverarbeitung der beiden Signale der Sensorelemente 11 für die Berechnung der Drehwinkelerfassung der Welle 6 beispielhaft wiedergegeben werden. Durch die Rotation des Übertragungszahnrades 2, aufgrund des Antriebes der Antriebswelle 6 über den Elektromotor in Verbindung mit der getrieblichen Anordnung, werden auch die Messzahnräder 3, 4 jeweils in Rotation versetzt. Die dadurch entstehenden unterschiedlichen Veränderungen der magnetischen Feldausrichtung der beiden Permanentmagnete 10 werden durch die Sensorelemente 11 detektiert. Die getrennt detektierten Signale der sich verändernden magnetischen Feldausrichtungen können in einer Datenaufbereitung 12 so bearbeitet werden, dass am Ausgang der Datenverarbeitung 13 ein exaktes Signal und damit eine absolute Positionsinformation zur Drehwinkelposition der Antriebswelle 6 vorliegt. Diese Drehwinkelinformationen werden an die Steuerung 14 der Antriebseinheit für den ordnungsgemäßen Betrieb des Bauwerksverschlusses weitergegeben.

Die Signale der Sensorelemente 11 können aber auch direkt an die Datenverarbeitung 13 weitergeleitet werden. In der Datenverarbeitung 13 wird aus den beiden Sensorsignalen ein Differenzsignal gebildet, woraus die aktuelle Drehwinkelstellung der Antriebswelle 6 im Betrieb berechnet wird. Es versteht sich, dass derartige Drehwinkelangaben einen absoluten Betrag oberhalb von 360° aufweisen.

Nach einem Stromausfall für die Antriebseinheit oder einer mechanischen Entriegelung der Antriebswelle 6, ist bei der anschließenden Inbetriebnahme eine erneute Lernfahrt entbehrlich, denn die Messeinrichtung 15 ist in der Lage sofort den Betrieb des Bauwerksverschlusses wieder aufzunehmen. Dieses spart Betriebskosten, weil ein Einmessen des Betriebsablaufes nicht durchgeführt werden muss.

Die Messeinrichtung 15 kann auswechselbar mit der getrieblichen Anordnung verbunden sein.

Während die gesamte vorhergehende Beschreibung davon ausgeht, dass die Elemente der ersten Baugruppe mit Zahnrädern aufgebaut worden ist, ist es in einer weiteren bevorzugten Ausführungsform auch möglich das Übertragungszahnrad 2 und die Messzahnräder 3, 4 durch Riemenscheiben zu ersetzen, wobei dann natürlich die Durchmesser der Messriemenscheiben einen unterschiedlichen Durchmesser aufweisen würden. Die getriebliche Verbindung zwischen den Riemenscheiben würde dann durch Riemen realisiert.

### Bezugszeichen

- 1: getriebliche Anordnung
- 2: Übertragungszahnrad
- 3: erstes Messzahnrad
- 4: zweites Messzahnrad
- 5: stationäre Baugruppe
- 6: Antriebswelle
- 7: Lager
- 8: Lager
- 9: Antriebsschnecke
- 10: Permanentmagnet
- 11: Sensorelement
- 12: Datenaufbereitung
- 13: Datenverarbeitung
- 14: Steuerung
- 15: Messeinrichtung
- 16: Schneckenrad
- 17: Antriebsrad
- 18: Magnetaufnahme
- 19: Verschluss
- 20: Antriebswellendurchtritt
- 21: Gehäuseoberteil
- 22: Platine
- 23: Halterung
- 24: Gehäuseunterteil
- 25: Verschraubung
- 26: Platinenaufnahme
- 27: Durchbruch
- 28: Abschirmung
- 29: Lagerung
- 30: Vorsprung
- 31: Abstützung

## Patentansprüche

1. Getriebliche Anordnung, angetrieben durch einen Elektromotor zur Verwendung bei automatisierten Bauwerksverschlüssen, im Wesentlichen bestehend aus einer Antriebsschnecke (9), deren Drehbewegung auf ein Schneckenrad (16) übertragen wird, sowie einem Antriebsrad (17), das mit einer Antriebswelle (6) zur Ortsveränderung des Bauwerksverschlusses wirkverbunden ist, sowie einer Positionsbestimmungseinrichtung von Positionen des Bauwerksverschlusses, **dadurch gekennzeichnet, dass** der getrieblichen Anordnung (1) eine Messeinrichtung (15) zur Bestimmung der absoluten Position oder einer absoluten Drehwinkelposition der Antriebswelle (6) zugeordnet ist, wobei die Messeinrichtung (15) aus einer stationären Baugruppe (5) und einer damit kontaktlos zusammenwirkenden Baugruppe aus drehbaren Elementen besteht, die mit der Antriebswelle (6) in Wirkverbindung stehen.

2. Getriebliche Anordnung nach Anspruch 1, **dadurch gekennzeichnet, dass** die drehbaren Elemente aus einem mit der Antriebswelle (6) verbundenen Übertragungszahnrad (2) und damit kämmenden, separat gelagertem ersten Messzahnrad (3) sowie einem zweiten Messzahnrad (4) besteht, wobei die Messzahnräder 3, 4 eine unterschiedliche Zähnezahl aufweisen, und dass den Messzahnrädern (3, 4) jeweils radial oder axial bipolar magnetisierte Permanentmagnete (10) drehfest zugeordnet sind.

3. Getriebliche Anordnung nach Anspruch 1, **dadurch gekennzeichnet, dass** die drehbaren Elemente aus einer mit der Antriebswelle (6) verbundenen Übertragungsriemenscheibe und damit mittels Riemen verbundenen, separat gelagerten ersten Riemenscheibe, sowie einer zweiten Riemenscheibe besteht, wobei die Durchmesser der ersten und der zweiten Riemenscheibe unterschiedlich sind, und dass der ersten Riemenscheibe und der zweiten Riemenscheibe jeweils radial oder axial bipolar magnetisierte Permanentmagnete (10) drehfest zugeordnet sind.

4. Getriebliche Anordnung nach den Ansprüchen 1 und 2, **dadurch gekennzeichnet, dass** die Permanentmagnete (10) durch Magnetaufnahmen (18) an oder mit den Messzahnrädern (3, 4), oder den Riemenscheiben fest verbunden sind.

5. Getriebliche Anordnung nach Anspruch 2, **dadurch gekennzeichnet, dass** eines der beiden Messzahnräder (3, 4) mindestens einen Zahn weniger oder mindestens einen Zahn mehr aufweist als das andere der beiden Messzahnräder (3, 4).

6. Getriebliche Anordnung nach einem oder mehreren der vorhergehenden Ansprüche, **dadurch gekennzeichnet, dass** die stationäre Baugruppe (5) auswechselbar an oder in der getrieblichen Anordnung ausgebildet ist und zwei Sensorelemente (11) aufweist, die als Magnetfeldsensoren ausgeführt sind, und die zur getrennten Messung der magnetischen Feldausrichtungsänderungen der im Betrieb sich unterschiedlich drehenden Permanentmagnete (10) eingesetzt werden.

7. Getriebliche Anordnung nach einem oder mehreren der vorhergehenden Ansprüche, **dadurch gekennzeichnet, dass** die von den Sensorelementen (11) getrennt ermittelten Feldstärkeänderungen der veränderbaren Permanentmagnetpostionen in einer Datenverarbeitung (13) so verarbeitbar sind, dass daraus der absolute Drehwinkel der Antriebswelle (6) ermittelt werden kann, und dass das Ergebnis an eine Steuerung (14) für eine Antriebseinheit, die mit der getrieblichen Anordnung (1) verbunden ist, weitergeleitet wird.

8. Getriebliche Anordnung nach einem oder mehreren der vorhergehenden Ansprüche, **dadurch gekennzeichnet, dass** die Signale der Datenverarbeitung (13) als Absolutpositionswerte leitungsgebunden oder per Funk an die Steuerung (14) übermittelt werden können.

9. Getriebliche Anordnung nach einem oder mehreren der vorhergehenden Ansprüche, **dadurch gekennzeichnet, dass** der absolute Drehwinkel der Antriebswelle (6) ein absolutes Maß für die Position des Bauwerksverschlusses ist.

10. Getriebliche Anordnung nach einem oder mehreren der vorhergehenden Ansprüche, **dadurch gekennzeichnet, dass** die Messeinrichtung (15) in einem separaten Gehäuse, vorzugsweise mit einem Gehäuseoberteil (21) und einem Gehäuseunterteil (24), angeordnet ist, wobei das Gehäuse von der Antriebswelle (6) durchdrungen und gleichzeitig mit dem Übertragungszahnrad (2) festverbunden wird, und dass mit dem Übertragungszahnrad (2) die in dem gemeinsamen Gehäuse gelagerten Messzahnräder (3, 4) in Wirkverbindung stehen.

11. Getriebliche Anordnung nach einem oder mehreren der vorhergehenden Ansprüche, **dadurch gekennzeichnet, dass** in dem Gehäuseoberteil (21) auswechselbar die stationäre Baugruppe (5) mit den Sensorelementen (11) so angeordnet ist, dass die Feldstärkeveränderungen der darunterliegenden Permanentmagnete (10) detektiert werden können.

12. Getriebliche Anordnung nach einem oder mehreren der vorhergehenden Ansprüche, **dadurch gekennzeichnet, dass** nach einem Stromausfall oder einer mechanischen Entriegelung der Antriebswelle (6) von der getrieblichen Anordnung (1) bei einem Neustart des Bauwerksverschlusses keine Lernfahrt ausgeführt werden muss.
